# EUROPÄISCHE PATENTSCHRIFT

(11) **EP 0 875 709 B1**
(45) Veröffentlichungstag und Bekanntmachung des Hinweises auf die Patenterteilung: **02.07.2003**
(21) Anmeldenummer: 98107694.6
(22) Anmeldetag: 28.04.1998
(51) Int. Cl.: F16L 33/08

(54) **Schlauchschelle**
Hose clip
Collier de serrage

(30) Priorität: 03.05.1997 DE 19718776
(43) Veröffentlichungstag der Anmeldung: 04.11.1998
(60) Teilanmeldung: 01117901.7
(73) Patentinhaber: Hans Oetiker AG Maschinen- und Apparatefabrik, 8812 Horgen (CH)
(72) Erfinder: Allert, Kurt, 78727 Oberndorf A. N. (DE)
(74) Vertreter: Grosse, Rainer, Dipl.-Ing.

(56) Entgegenhaltungen:
- GB-A- 536 267
- US-A- 2 268 211

## Beschreibung

Die Erfindung betrifft eine Schlauchschelle mit einem Spanngehäuse, in dem eine Spannschnecke drehbar lagert, die mit ihrem Gewindesteg in Mitnahmeausnehmungen eines Endbereichs eines Spannbands eingreift, dessen anderer Endbereich am Spanngehäuse befestigt ist, und mit einer Verdrehsicherung zur Fixierung der Spannschnecken-Drehstellung relativ zum Spanngehäuse.

Schlauchschellen werden auf verschiedenen technischen Gebieten für Spannaufgaben eingesetzt. Das schlaufenartig ausgebildete Spannband weist in einem Endbereich Mitnahmeausnehmungen auf, in die eine in einem Spanngehäuse der Schlauchschelle drehbar gelagerte Spannschnecke eingreift. Der andere Endbereich des Spannbandes ist am Spanngehäuse befestigt. Wird die Spannschnecke zum Beispiel mit einem Spannwerkzeug, insbesondere mit einem Steckschlüssel, verdreht, so wird der Schlaufendurchmesser des Spannbandes -je nach Drehrichtung- verkleinert oder vergrößert, das heißt, die Schlauchschelle wird festgespannt oder gelöst. Für kritische Anwendungen ist es erforderlich, die Spannschnecke mit einem vorgegebenen Drehmoment anzuziehen, so daß eine definierte Spannkraft aufgebracht wird. Der auf diese Art und Weise geschaffene Spannzustand soll langfristig und auch unter äußeren Einwirkungen, beispielsweise Vibrationen, aufrechterhalten bleiben. Hierzu wird die Gewindesteigung des Gewindestegs derart gewählt, daß die Spannschnecke durch Selbsthemmung festgelegt ist. Es hat sich jedoch gezeigt, daß in manchen Fällen dennoch ein unbeabsichtigtes Lockern der Schlauchschelle auftreten kann.

Unabhängig vom Einsatzgebiet der Schlauchschellen besteht der Wunsch, die mit einer bestimmten Spannkraft angezogene Schlauchschelle gegen unbefugtes Verstellen zu sichern. Dies ist insbesondere dann wichtig, wenn das Festspannen mit einem bestimmten Anzugsmoment der Spannschnecke der Spannvorrichtung erfolgt ist, so daß ein Lösen und möglicherweise anschließend erfolgendes Wiederfestziehen zu einer zu losen oder aber zu festen Verbindung führt. In beiden Fällen ist die Sicherheit einer korrekten, belastbaren Verbindung nicht mehr gewährleistet. Dies kann zu weitreichenden Folgen führen.

Aus der GB 536 267 A ist eine Schlauchschelle der eingangs genannten Art bekannt, die zur Fixierung der Spannschnecken-Drehstellung eine Verdrehsicherung mit einem von einem Draht gebildeten Anschlag aufweist. Zur Ausbildung der Verdrehsicherung ist der Draht durch ein Loch im Spanngehäuse beziehungsweise durch Löcher in einem am Spanngehäuse angebrachten Aufsatz fixiert und durchsetzt den Schneckenkopfschlitz. Zum Fixieren des Drahtes in Sicherungsposition ist er unter Ausbildung einer Schlaufe an seinen Enden mit einer Plombe versehen oder als beidendig aufgebogener Splint ausgebildet.

Der Erfindung liegt die Aufgabe zugrunde, eine Schlauchschelle der eingangs genannten Art zu schaffen, bei der die Verdrehsicherung in sehr einfacher Weise zustande kommt.

Diese Aufgabe wird erfindungsgemäß dadurch gelöst, daß das Spanngehäuse oder das Spannband mindestens einen, von einem Blechabschnitt gebildeten Anschlag aufweist, der -zur Ausbildung der Verdrehsicherungin den Wirkungsbereich eines Gegenanschlags der Spannschnecke eingebracht ist beziehungsweise einbringbar ist. Durch die Verdrehsicherung ist verhindert, daß Manipulationen von einem Laien an der Spannschnecke erfolgen und/oder daß sich die Spannschnecke selbsttätig verdreht. Dies wird durch die Anlage des Gegenanschlags am Anschlag erzielt. Befindet sich die Schlauchschelle im noch nicht montierten Zustand, so ist der Anschlag in einer Position, daß er ein Verdrehen der Spannschnecke zuläßt. Ist die Schlauchschelle montiert und die Spannschnecke mit dem gewünschten Drehmoment festgespannt, so befindet sich der Anschlag in den Wirkungsbereich des Gegenanschlags, um die Verdrehsicherung zu bilden. Dies kann selbsttätig erfolgen oder aber durch bewußte Manipulation durch den Anwender. Eine selbsttätige Sicherung tritt vorzugsweise dadurch ein, daß der Anschlag federnd ausgebildet ist, so daß er sich bei einer gewollten Verdrehung der Spannschnecke selbst verlagert und im montierten Zustand der Schlauchschelle durch die Federwirkung derart auf die Spannschnecke Einfluß nimmt, daß die Verdrehsicherung gebildet ist. Die im Zuge dieser Anmeldung erwähnte, selbsttätige Verdrehung der Spannschnecke ist nicht so zu verstehen, daß unter normalen Bedingungen die Stellung der Spannschnecke nicht beibehalten wird, denn die Spannschnecke weist aufgrund einer Gewindesteigung von vorzugsweise < 7% eine Selbsthemmung auf, jedoch sind auch außerordentliche, gegebenenfalls unerwünschte Bedingungen denkbar, bei denen neben der Selbsthemmung die erfindungsgemäße Verdrehsicherung zusätzliche Sicherheit gegen ein Verdrehen der Spannschnecke bietet.

Der Anschlag ist einstückig am Spanngehäuse oder am Spannband ausgebildet, wodurch die Herstellungskosten verringert werden. Besonders einfach und preisgünstig ist es, wenn der einstückig realisierte Anschlag zusammen mit den vorzugsweise in Stanz- und Biegetechnik hergestellten Einzelteilen der Schlauchschelle hergestellt wird, wobei für die Erstellung der Teile vorzugsweise Blech, insbesondere Stahlblech, verwendet wird, und daß zum Herbeiführen der Sicherungsstellung der Blechabschnitt derart in Richtung auf die Spannschnecke, insbesondere auf deren Kopf, gebogen wird, daß keine unbeabsichtigte Verdrehung erfolgen kann. Sofern das Gehäuse der Schlauchschelle als Blechstanzteil ausgebildet ist, läßt sich die Verdrehsicherung bei der Gehäuseerstellung gleichzeitig einstückig mit herstellen, indem bei den Stanz- und Biegevorgängen der den Anschlag bildende Lappen mit erstellt wird. Bei der einstückigen Ausbildung ist insbesondere die bereits vorstehend beschriebene Federwirkung realisierbar, das heißt, der Anschlag wird von einem federnden Materialstück des Spanngehäuses oder des Spannbandes gebildet, wobei die Federwirkung ein gewolltes Verdrehen der Spannschnecke zuläßt, jedoch derart hohe Kräfte aufbringt, daß ein ungewolltes Verdrehen der Spannschnecke verhindert ist. Die Federwirkung des Anschlags wird insbesondere durch dessen Eigenfederung realisiert. Handelt es sich bei dem Gegenanschlag der Spannschnecke beispielsweise um eine Mehrkantkontur, die zur Drehachse der Spannschnecke näher liegende und weiter entfernt liegende Abschnitte aufweist, so wird bei einer bewußten Verdrehung der Spannschnecke durch die weiter entfernt liegenden Abschnitte der Anschlag federnd ausgelenkt; befindet sich die Spannschnecke in einer Drehstellung, in der ein zur Drehachse näher liegender Abschnitt dem Anschlag gegenüberliegt, so legt sich dieser aufgrund der Federwirkung an den den Gegenanschlag bildenden Abschnitt an und verhindert auf diese Art und Weise eine ungewollte Verdrehung.

Es ist -nach einer bevorzugten Ausführungsform der Erfindung- auch möglich, daß der Anschlag durch plastische Materialverformung in den Wirkungsbereich des Gegenanschlags hineinverlagert ist beziehungsweise verlagerbar ist. Im nicht montierten Zustand der Schlauchschelle liegt der noch nicht verformte Zustand vor; der Anschlag ist noch nicht in den Wirkungsbereich des Gegenanschlags verbracht.

Wird die Schlauchschelle montiert und soll anschließend die Sicherungsstellung der Verdrehsicherung herbeigeführt werden, so wird durch plastische Materialverformung des Anschlags selbst oder eines Teiles, das den Anschlag hält, der Anschlag in die Sicherungsstellung gebracht, beispielsweise durch Verbiegen eines Materialstegs.

Insbesondere ist vorgesehen, daß die Spannschnecke, insbesondere deren Kopf, mindestens eine, den Gegenanschlag bildende Gegenanlagekante oder -fläche, insbesondere eine Mehrkantanordnung, aufweist. An die Gegenanlagekante oder -fläche grenzt -in Umfangsrichtung der Spannschnecke betrachtet- ein Materialabschnitt an, der weiter von der Drehachse der Spannschnecke entfernt liegt und daher bei dem Versuch einer Verdrehung der Spannschnecke gegen den Anschlag tritt. Wird der Gegenanschlag von der erwähnten Mehrkantanordnung des Kopfes der Spannschnecke gebildet, so ergibt sich eine Doppelfunktion, denn die Mehrkantanordnung dient einerseits als Ansetzpunkt für einen Gabelschlüssel oder einen Steckschlüssel zum Verdrehen der Spannschnecke, und andererseits bildet sie den Gegenanschlag aus. In Abhängigkeit von der Anzahl der Flächen und Kanten der Mehrkantanordnung läßt sich die Spannschnecke in entsprechenden Teilwinkelverdrehstellungen mittels des Anschlags sichern. Weist der Kopf der Spannschnecke beispielsweise nur eine sekantenförmige Gegenanlagefläche auf, die den Gegenanschlag bildet, so läßt sich die Spannschnecke jeweils nur in 360° Winkelstellungen mittels des Anschlags sichern, das heißt, die Sicherungsstellung kann nur nach jeweils einer vollen Umdrehung eingenommen werden.

Nach einer bevorzugten Ausführungsform der Erfindung ist vorgesehen, daß der Anschlag von mindestens einem, von mindestens einem Rand des Spanngehäuses ausgehender, abbiegbarer Lappen gebildet ist.

Alternativ ist es jedoch auch möglich, daß das Gehäuse ein Gehäuseoberteil aufweist, daß zum in Eingriff- oder Außereingriffbringen der Spannschnecke mit/aus den Mitnahmeausnehmungen des Spannbandes schwenkbar in einem Gehäuseunterteil lagert, und daß der Anschlag am Gehäuseoberteil und/oder am Gehäuseunterteil ausgebildet ist. Insbesondere ist vorgesehen, daß das Gehäuseunterteil U-förmig ausgebildet ist, und einen Boden sowie zwei davon ausgehende Seitenwände aufweist, wobei vom Boden der Anschlag als abbiegbarer Lappen ausgeht.

Nach einer Weiterbildung der Erfindung ist vorgesehen, daß der Anschlag bügelförmig, insbesondere als bügelförmiger, abbiegbarer Lappen, ausgebildet ist, der in Sicherungsposition einen Teilumfang der Spannschnecke sichernd umgreift.

Der Lappen kann vorzugsweise eine Kantenkontur aufweisen, die an die Mantel-Peripherie der Spannschnecke, insbesondere ihres Kopfes, angepaßt ist. Sofern der Kopf von einer Mehrkantanordnung, beispielsweise von einem Sechskant, gebildet ist, weist die Kantenkontur des Lappens ebenfalls eine Sechskantstruktur oder einen Teil davon auf, so daß die Kantenkontur des Lappens formschlüssig die Kantenkontur der Spannschnecke in Sicherungsstellung umgreift.

Um den abbiegbaren Lappen einfach und definiert in Sicherungsstellung verbringen zu können, ist vorzugsweise vorgesehen, daß er eine Sollbiegestelle aufweist. Diese kann beispielsweise durch eine Materialschwächungszone realisiert sein.

Die Zeichnungen veranschaulichen die Erfindung anhand von Ausführungsbeispielen und zwar zeigt:
- Figur 1: eine Seitenansicht einer Schlauchschelle im Bereich ihres Spanngehäuses,
- Figur 2: eine Draufsicht der Schlauchschelle gemäß Figur 1,
- Figur 3: eine Stirnansicht der Schlauchschelle gemäß der Figuren 1 und 2 und
- Figur 4: ein weiteres Ausführungsbeispiel einer Schlauchschelle in Seitenansicht.

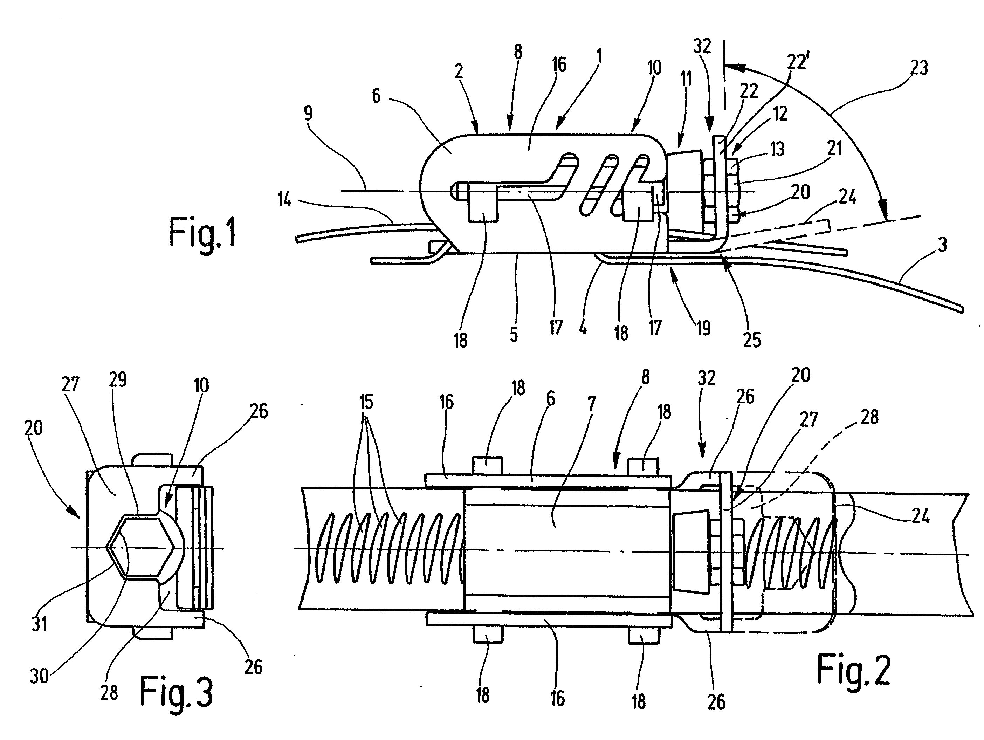

Die Figur 1 zeigt eine Schlauchschelle 1 mit einer Spannvorrichtung 2 und einem Spannband 3. Das Spannband 3 ist mit seinem Endbereich 4 am Boden 5 eines U-förmigen Gehäuseunterteils 6 befestigt. Dem Gehäuseunterteil 6 ist ein Gehäuseoberteil 7 (Figur 2) zugeordnet, wobei Gehäuseunterteil 6 und Gehäuseoberteil 7 ein Spanngehäuse 8 der Spannvorrichtung 2 bilden. Im Gehäuseoberteil 7 ist um eine Drehachse 9 eine Spannschnecke 10 drehbar gelagert, welche mit einem Kopf 11 in axialer Richtung aus dem Gehäuseoberteil 7 herausragt. Der Kopf 11 der Spannschnecke 10 weist eine Mehrkantanordnung 12 auf, die als Sechskant 13 ausgebildet ist. Der Sechskant 13 dient zum Drehen der Spannschnecke 10, indem vorzugsweise auf ihn ein Steckschlüssel aufgesetzt wird. Durch Drehung der Spannschnecke 10 wird der andere Endbereich 14 des schlaufenförmigen Spannbands 3 zum Verkleinern beziehungsweise Vergrößern der Schlaufe verlagert, da die Spannschnecke 10 mit ihrem Gewindegang in Mitnahmeausnehmungen 15 des Spannbands 3 eingreift.

Die U-Form des Gehäuseunterteils 6 ergibt sich durch zwei vom Boden 5 einstückig ausgehende und abgewinkelte Seitenwände 16, die parallel zueinander verlaufen. Die Seitenwände 16 weisen Durchbrüche beziehungsweise Ausnehmungen 17 auf, in die seitlich einstückig am Gehäuseoberteil 7 ausgebildete Lappen 18 eingreifen. Durch Relativverschiebung von Gehäuseunterteil 6 und Gehäuseoberteil 7 läßt sich das Gehäuseoberteil 7 zusammen mit der darin drehbar gelagerten Spannschnecke 10 aufklappen, wodurch die Spannbandmontage beziehungsweise - demontage erleichtert wird.

Gemäß der Figuren 1 bis 3 geht von der Stirnseite 19 des Bodens 5 einstückig ein Anschlag 20 aus, der mit einem Gegenanschlag 21 der Spannschnecke 10 zusammenwirkt. Der Gegenanschlag 21 wird von dem Kopf 11 der Spannschnecke 10, insbesondere von dem Sechskant 13 gebildet. Der Anschlag 20 ist als vom Boden 5 abbiegbarer Lappen 22 ausgebildet. Der Biegevorgang wird mittels eines den Biegewinkel kennzeichnenden Doppelpfeils 23 in Figur 1 angedeutet. In gestrichelter Linie 24 ist der nicht verformte Lappen 22 gekennzeichnet. In dieser Lappenposition wird die Schlauchschelle an einem Gegenstand montiert und mit dem gewünschten Drehmoment angezogen, so daß sich die entsprechende Spannkraft einstellt. Ist dies erfolgt, so wird der Lappen 22 um die Biegelinie abgewinkelt (Biegewinkel gemäß Bezugszeichen 23), wodurch er in den Wirkungsbereich des Gegenanschlags 21, nämlich in den Wirkungsbereich des Sechskants 13 tritt. Den Figuren 2 und 3 ist insbesondere entnehmbar, daß der Anschlag 20 bügelförmig ausgebildet ist. Er weist zwei Seitenstege 26 auf, die mit dem Boden 5 des Gehäuseunterteils 6 einstückig verbunden sind. Die Enden der beiden Seitenstege 26 sind einstückig über einen Quersteg 27 miteinander verbunden. Eine zwischen den beiden Seitenstegen 26 und dem Quersteg 27 ausgebildete Innenöffnung 28 des Anschlags 20 weist -zumindest abschnittsweise- eine Kantenkontur 29 auf, die der Mantelperipherie 30 des Kopfs 11 angepaßt ist. Im vorliegenden Falle erfolgt diese Anpassung an den Sechskant 13 dadurch, daß die Kantenkontur 29 einen Abschnitt einer Innensechskantkontur 31 bildet. Wird -wie in den Figuren 1 und 2 in gestrichelter Linie 24 angegeben- der Anschlag 20 um den Winkel gemäß Bezugszeichen 23 hochgebogen, so übergreift gemäß Figur 3 die Innensechskantkontur 31 formschlüssig den Sechskant 13 des Kopfs 11 der Spannschnecke 10, wodurch eine Verdrehsicherung 32 geschaffen ist. Eine unbeabsichtigte Verdrehung der Spannschnecke 10 ist hierdurch auf einfache Weise verhindert.

Soll eine angezogene und mittels der Verdrehsicherung 32 gesicherte Schlauchschelle wieder gelöst werden, so ist es lediglich erforderlich, den Anschlag 20 so rückzubiegen, daß der Kopf 11 der Spannschnecke 10 zum Verdrehen freigegeben wird. Vorzugsweise ist der Anschlag 20 aus einem Material, das einen mehrfachen Umformvorgang zuläßt, ohne daß es zu einem Materialbruch kommt.

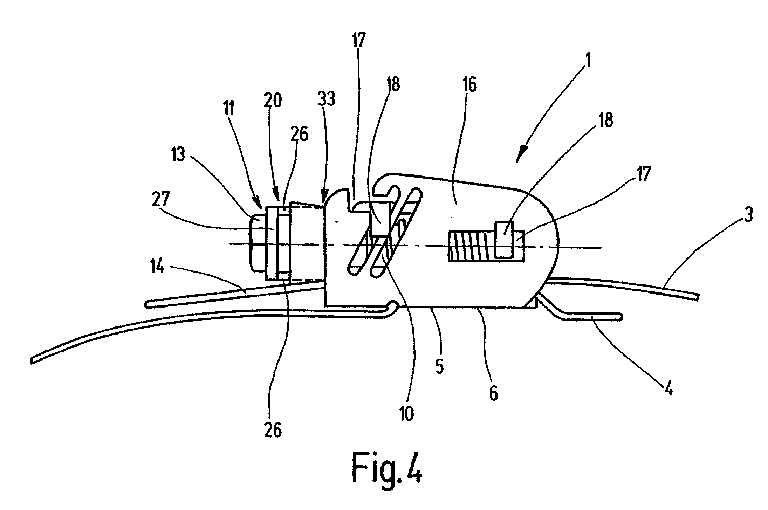

Die Figur 4 erläutert ein weiteres Ausführungsbeispiel, das im wesentlichen dem Ausführungsbeispiel der Figuren 1 bis 3 entspricht, so daß nachstehend nur auf den Unterschied hinsichtlich der Ausbildung des Anschlags 20 eingegangen werden soll. Dieser geht -anders als beim Ausführungsbeispiel der Figuren 1 bis 3- nicht vom Boden 5 des Gehäuseunterteils 6, sondern von einem Rand 33 einer der Seitenwände 16 des Gehäuseunterteils 6 aus. Er weist -ebenso wie beim Ausführungsbeispiel der Figuren 1 bis 3- zwei Seitenstege 26 sowie einen die Seitenstege 26 miteinander verbindenden Quersteg 27 auf und besitzt ebenfalls eine Kantenkontur seiner Innenöffnung, die formschlüssig den Sechskant 13 des Kopfes 11 der Spannschnecke 10 in Sicherungsstellung übergreift. Die Herbeiführung der Sicherungsstellung beziehungsweise das Entsichern erfolgt ebenfalls durch plastische Materialverformung des Anschlags 20.

## Patentansprüche

1. Schlauchschelle mit einem Spanngehäuse (8), in dem eine Spannschnecke (10) drehbar lagert, die mit ihrem Gewindesteg in Mitnahmeausnehmungen (15) eines Endbereichs (14) eines Spannbands (3) eingreift, dessen anderer Endbereich (4) am Spanngehäuse (8) befestigt ist, und mit einer Verdrehsicherung (32) zur Fixierung der Spannschnecken-Drehstellung relativ zum Spanngehäuse (8), **dadurch gekennzeichnet, dass** das Spanngehäuse (8) oder das Spannband (3) mindestens einen, von einem Blechabschnitt (22') gebildeten Anschlag (20) aufweist, der einstückig am Spanngehäuse (8) oder am Spannband (3) ausgebildet ist und -zur Ausbildung der Verdrehsicherung (32)- in den Wirkungsbereich eines Gegenanschlags (21) der Spannschnecke (10) gebogen beziehungsweise biegbar ist.

2. Schlauchschelle nach einem der vorhergehenden Ansprüche, **dadurch gekennzeichnet, daß** der Anschlag (20) durch Federwirkung im Wirkungsbereich des Gegenanschlags (21) liegt.

3. Schlauchschelle nach einem der vorhergehenden Ansprüche, **dadurch gekennzeichnet, daß** der Anschlag (20) durch plastische Materialverformung in den Wirkungsbereich des Gegenanschlags (21) hinein verlagert ist beziehungsweise verlagerbar ist.

4. Schlauchschelle nach einem der vorhergehenden Ansprüche, **dadurch gekennzeichnet, daß** die Spannschnecke (10), insbesondere ihr Kopf (11), mindestens eine den Gegenanschlag (21) bildende Gegenanlagekante oder -fläche, insbesondere eine Mehrkantanordnung (12), vorzugsweise einen Sechskant (13), aufweist.

5. Schlauchschelle nach Anspruch 4, **dadurch gekennzeichnet, daß** die Mehrkantanordnung (12) von einem Schlüsselkopf der Spannschnecke (10) gebildet ist.

6. Schlauchschelle nach einem der vorhergehenden Ansprüche, **dadurch gekennzeichnet, daß** der Anschlag (20) von mindestens einem, von mindestens einem Rand (33) des Spanngehäuses (8) ausgehenden, abbiegbaren Lappen (22) gebildet ist.

7. Schlauchschelle nach einem der vorhergehenden Ansprüche, **dadurch gekennzeichnet, daß** das Spanngehäuse (8) ein Gehäuseoberteil (7) aufweist, das zum Ineingriff- oder Außereingriffbringen der Spannschnecke (10) mit/aus den Mitnahmeausnehmungen (15) des Spannbands (3) schwenkbar in einem Gehäuseunterteil (6) lagert, und daß der Anschlag (20) am Gehäuseoberteil (7) und/oder am Gehäuseunterteil (6) ausgebildet ist.

8. Schlauchschelle nach einem der vorhergehenden Ansprüche, **dadurch gekennzeichnet, daß** der Anschlag (20) bügelförmig, insbesondere als bügelförmiger, abbiegbarer Lappen (22), ausgebildet ist, der in Sicherungsposition einen Teilumfang der Spannschnecke (10) sichernd umgreift beziehungsweise teilweise umgreift.

9. Schlauchschelle nach einem der vorhergehenden Ansprüche, **dadurch gekennzeichnet, daß** der Lappen (22) eine Kantenkontur (29) aufweist, die an die Mantelperipherie (30) der Spannschnecke (10), insbesondere ihres Kopfes (11), angepaßt ist.

10. Schlauchschelle nach einem der vorhergehenden Ansprüche, **dadurch gekennzeichnet, daß** der Lappen (22) eine Sollbiegestelle aufweist.

## Claims

1. Hose clip comprising a tightening housing (8) in which a tightening screw (10) is rotatably mounted and which engages with its threaded web in entraining recesses (15) of an end region (14) of a tightening strip (3), the other end region (4) of which is fastened to the tightening housing (8) and to an anti-rotation device (32) for fixing the rotary position of the tightening screw relative to the tightening housing (8), **characterised in that** the tightening housing (8) or the tightening strip (3) comprises at least one stop (20) formed by a sheet metal portion (22'), which is constructed in one piece on the tightening housing (8) or on the tightening strip (3) and is bent or can be bent in the range of influence of a counter stop (21) of the tightening screw (10) to form the anti-rotation device (32).

2. Hose clip according to any of the preceding claims, **characterised in that** the stop (20) is located in the range of influence of the counter stop (21) owing to spring effect.

3. Hose clip according to any of the preceding claims, **characterised in that** the stop (20) is displaced or can be displaced into the range of influence of the counter stop (21) owing to plastic material deformation.

4. Hose clip according to any of the preceding claims, **characterised in that** the tightening screw (10), in particular its head (11), comprises at least one counter stop edge or face, in particular a polygonal arrangement (12), preferably a hexagon (13), forming the counter stop (21).

5. Hose clip according to claim 4, **characterised in that** the polygonal arrangement (12) is formed by a key head of the tightening screw (10).

6. Hose clip according to any of the preceding claims, **characterised in that** the stop (20) is formed by at least one bendable tab (22) issuing from at least one edge (33) of the tightening housing (8).

7. Hose clip according to any of the preceding claims, **characterised in that** the tightening housing (8) comprises a housing upper part (7) which is pivotally mounted in a housing lower part (6) for engaging and disengaging the tightening screw (10) with/from the entraining recesses (15) of the tightening strip (3), and **in that** the stop (20) is formed on the housing upper part (7) and/or on the housing lower part (6).

8. Hose clip according to any of the preceding claims, **characterised in that** the stop (20) is stirrup-shaped, in particular designed as a stirrup-shaped, bendable tab (22), which in the securing position surrounds or partially surrounds a partial periphery of the tightening screw (10) in a securing manner.

9. Hose clip according to any of the preceding claims, **characterised in that** the tab (22) has an edge contour (29) adapted to the external periphery (30) of the tightening screw (10), in particular its head (11).

10. Hose clip according to any of the preceding claims, **characterised in that** the tab (22) has a predetermined breaking point.

## Revendications

1. Collier de serrage, avec un boîtier de serrage (8), dans lequel est montée à rotation une vis sans fin de serrage (10) qui s'engage par son corps fileté dans des évidements entraîneurs (15) d'une région terminale (14) d'une bande de serrage (3) dont l'autre région terminale (4) est fixée au boîtier de serrage (8), et avec un blocage en rotation (32) pour bloquer la position de rotation de la vis de serrage par rapport au boîtier de serrage (8), **caractérisé en ce que** le boîtier de serrage (8) ou la bande de serrage (3) présente au moins une butée (20), formée par un tronçon de tôle (22'), qui est réalisée d'un seul tenant sur le boîtier de serrage (8) ou sur la bande de serrage (3) et qui - afin de former le blocage en rotation (32) - est courbée ou peut être courbée dans la région d'action d'une contre-butée (21) de la vis sans fin de serrage (10).

2. Collier de serrage selon l'une des revendications précédentes, **caractérisé en ce que** la butée (20) se situe par l'action d'un ressort dans la région d'action de la contre-butée (21).

3. Collier de serrage selon l'une des revendications précédentes, **caractérisé en ce que** la butée (20) est déplacée ou peut être déplacée à l'intérieur de la région d'action de la contre-butée (21) par déformation plastique de matière.

4. Collier de serrage selon l'une des revendications précédentes, **caractérisé en ce que** la vis sans fin de serrage (10), notamment sa tête (11), présente au moins une arête ou une face de contre-appui formant la contre-butée (21), notamment un agencement polygonal (12), de préférence un six pans (13).

5. Collier de serrage selon la revendication 4, **caractérisé en ce que** l'agencement polygonal (12) est formé par une tête pour clé de la vis sans fin de serrage (10).

6. Collier de serrage selon l'une des revendications précédentes, **caractérisé en ce que** la butée (20) est formée par au moins une patte (22) pouvant être recourbée, qui part d'au moins un bord (33) du boîtier de serrage (8).

7. Collier de serrage selon Tune des revendications précédentes, **caractérisé en ce que** le boîtier de serrage (8) présente une partie supérieure de boîtier (7) qui, en vue d'engager la vis sans fin de serrage (10) dans les évidements entraîneurs (15) de la bande de serrage (3) ou de la désengager, est montée à pivotement dans une partie inférieure de boîtier (6), et **en ce que** la butée (20) est configurée sur la partie supérieure de boîtier (7) et/ou sur la partie inférieure de boîtier (6).

8. Collier de serrage selon l'une des revendications précédentes, **caractérisé en ce que** la butée (20) est réalisée en forme d'étrier, notamment sous la forme d'une patte (22) en étrier pouvant être recourbée qui, en position de blocage, entoure ou entoure partiellement, avec blocage, une partie de la circonférence de la vis sans fin de serrage (10).

9. Collier de serrage selon l'une des revendications précédentes, **caractérisé en ce que** la patte (22) présente un contour d'arête (29) qui est adapté à la périphérie extérieure (30) de la vis sans fin de serrage (10), notamment de sa tête (11).

10. Collier de serrage selon l'une des revendications précédentes, **caractérisé en ce que** la patte (22) présente une zone de courbure privilégiée.
